Europäisches Patentamt

European Patent Office

Office européen des brevets

(11) Publication number: **0 266 092**
**A1**

# EUROPEAN PATENT APPLICATION

(21) Application number: **87309073.2**

(22) Date of filing: **14.10.87**

(51) Int. Cl.⁴: **F16L 27/08 , F16L 27/00**

(30) Priority: **27.10.86 GB 8625628**

(43) Date of publication of application:
**04.05.88 Bulletin 88/18**

(84) Designated Contracting States:
**AT BE CH DE ES FR GB GR IT LI LU NL SE**

(71) Applicant: **ANSON LIMITED**
**Queensway North Team Valley Trading Estate**
**Gateshead Tyne & Wear, NE11 0NX(GB)**

(72) Inventor: **Anderson, Robert William**
**Whitslaid Cade Hill Road**
**Stocksfield Northumberland(GB)**

(74) Representative: **Gura, Henry Alan et al**
**MEWBURN ELLIS & CO. 2/3 Cursitor Street**
**London EC4A 1BQ(GB)**

(54) Swivel pipe joint.

(57) A swivel joint between two lengths of pipe comprises a male connecting piece (4) on the end of one length of pipe (2) and a female connecting piece (10) on the end of the other length of pipe. A cylindrical bearing member (12) mounted on the male connecting piece (4) is retained thereon by first clip means (18) located in a circumferential groove in the outer wall of the male connecting piece (4). A further circumferential groove in the internal wall of the female connecting piece (10) is adapted to house second clip means (26) such that, on location of the male connecting piece (4) into the female connecting piece (10), the first and second clip means (18,26) react against the ends of the bearing member (12) to effect a joint in which the connecting pieces can swivel relative to one another with the inner and outer faces of the bearing member (12) making bearing engagement with the male and female connecting pieces (4,10) respectively.

This invention relates to pipe joints and more particularly to swivel joints between adjacent lengths of pipe which are interconnected to form a pipeline for carrying fluids, for example for conveying fluids at high pressure in oil exploration and related industries.

Oil pipelines associated with exploration drilling rigs commonly comprise a series of interconnected lengths of steel pipe each of which includes a male connecting piece at one end and a female connecting piece at the other end. The inlets and outlets to be connected by such pipelines can be at various positions relative to one another and it is not always possible or practical to provide rigid pipelines particularly suited to all applications.

Consequently, it has become established practice to provide pipelines comprising lengths of pipe of various configurations, including linear and elbow-shaped lengths, which are interconnected with one another by means of swivel joints whereby relative axial rotation of adjacent lengths of pipe can occur. Thus, one or more swivel joints, together with appropriately-shaped lengths of pipe, can be incorporated in a pipeline to enable connection between points at differing heights and angles.

Swivel joints between adjacent lengths of pipe commonly incorporate a series of circumferential tracks or raceways within the male and female connecting pieces which house ball bearings as the bearing thrust medium. Sealing of the two pipe lengths relative to one another is achieved by means of annular sealing rings axially compressed between adjacent internal, radially extending faces of the male and female connecting pieces.

Such arrangements have a number of disadvantages. The pipelines in question, once they have adopted a desired configuration between two points to be interconnected, remain substantially in that position. Thus, the swivel joints eventually adopt a substantially stationary position, and it is not good engineering practice to use ball bearings for stationary, high load thrust situations. The bearings, as well as the tracks, can become dented and distorted, while such swivel joints are difficult to repair due to ball bearings having to be extracted and re-inserted through small apertures in the connecting pieces.

Further, and perhaps of even more importance, the seals associated with such swivel joints are very prone to failure. As the thrust bearing wears, the degree of axial compression on the annular sealing rings can decrease until leakage can occur, often with catastrophic results.

Our co-pending European patent application no. 86.306308.7 discloses a swivel joint between two lengths of pipe that overcomes the above-mentioned problems of existing arrangements and which can be readily assembled and disassembled.

There may, however, be situations where the expense associated with our earlier swivel joint may not be warranted or where it may be desirable to provide a simpler and cheaper swivel joint.

According to the present invention there is provided a swivel joint between two lengths of pipe, the joint comprising a male connecting piece on the end of one length of pipe, a corresponding female connecting piece on the end of the other length of pipe, and a cylindrical bearing member mounted on the male connecting piece, said bearing member being retained on the male connecting piece by first clip means, preferably a resilient circlip, housed in a circumferential groove formed in the outer wall of the male connecting piece adjacent the free end thereof, the internal wall of the female connecting piece having a circumferential groove formed therein in such a manner that, on location of the male connecting piece within the female connecting piece and on location of second clip means, preferably a resilient circlip, into said groove in the female connecting piece, the joint is effected with the first and second clip means each reacting against the associated end of the bearing member whereby the connecting pieces can swivel relative to one another about the central longitudinal axis of the joint with the inner and outer faces of the bearing member effecting bearing engagement with the male and female connecting pieces respectively.

Preferably the joint further comprises a pair of thrust washers on the male connecting piece one to each end of the cylindrical bearing member and against which the first and second clip means react.

A preferred joint comprises at least one substantially annular seal reacting between opposed, radially spaced surfaces on the male and female connecting pieces, said seal being located axially inwardly of the first clip means within the joint and effecting a radial seal between the two connecting pieces.

Conveniently an annular dust seal is located within the free end of the female connecting piece axially outwardly of the second clip means within the joint to react between opposed, radially spaced surfaces of the male and female connecting pieces.

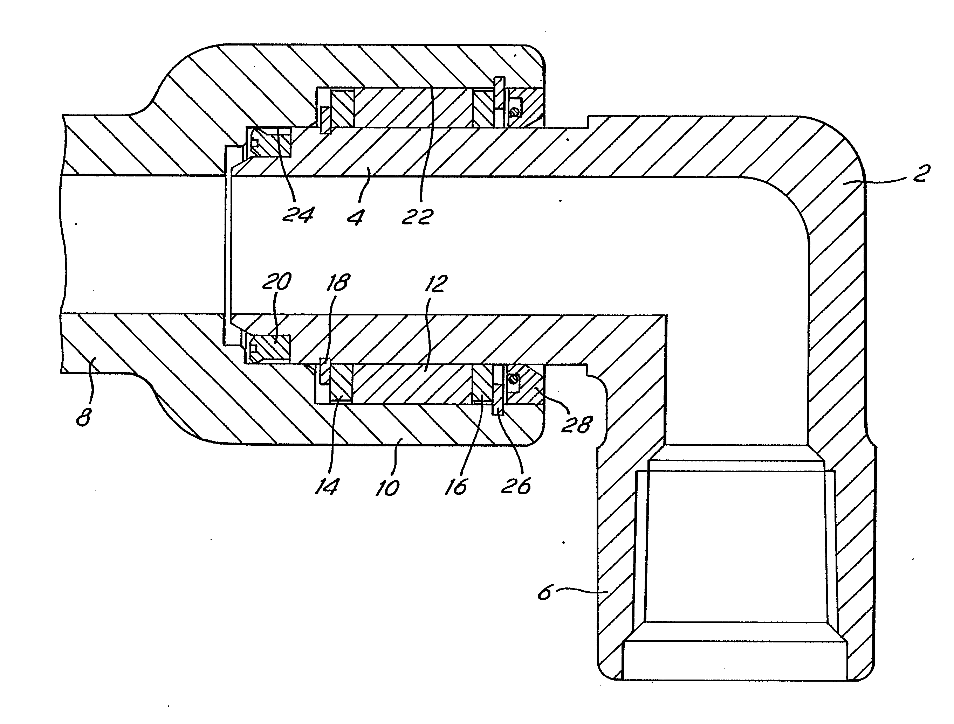

By way of example only, an embodiment of the invention will now be described in greater detail with reference to the accompanying drawing which is a longitudinal section through a joint according to the invention.

Referring to the drawing there is shown a pipeline assembly comprising an elbow pipe 2 having a male connecting piece 4 at one end thereof forming part of a swivel joint and a conventional female connecting piece 6 at the other end, and a pipe 8 only part of which is shown and having a female connecting piece 10 at one end thereof forming the other part of the swivel joint.

Mounted on the male connecting piece 4 are a cylindrical bearing member 12, preferably of bronze, and a pair of thrust washers 14,16 one to each end of the bearing member 12 for reasons which will become apparent.

A circumferential groove in the outer wall of the male connecting piece 4 adjacent the free end thereof houses a resilient circlip 18 which abuts the thrust washer 14 and retains the bearing member 12 and washers 14,16 on said male connecting piece 4.

The free end of the male connecting piece has a reduced diameter shoulder formed therearound on which seats an annular seal 20.

The female connecting piece 10 is formed with a bearing surface 22 adapted for bearing engagement by the outer wall of the bearing member 12, and a reduced diameter surface 24 adapted for sealing engagement by the annular seal 20. A circumferential groove is formed in the inner wall of the female connecting piece 10 adjacent the free end thereof for reasons which will become apparent.

Assembly of the described swivel joint is as follows.

After location of the thrust washer 16, bearing member 12 and thrust washer 14 on the male connecting piece, the circlip 18 is sprung into the groove in the male connecting piece to retain said components thereon, and the seal 20 is positioned on its seating.

The male connecting piece is inserted into the female connecting piece to the operative position shown in the drawing in which the groove in the female connecting piece 10 is located just axially beyond the thrust washer 16. A circlip 26 is then sprung into said groove to react against the washer 16 and to complete the assembly whereby all axial movement between the two connecting pieces is taken up whilst at the same time the seal 20 ensures an effective radial seal between the two components, which components are able to swivel relative to one another about the central longitudinal axis of the joint.

The bearing member 12 is prevented from moving axially by being sandwiched between the circlips 18,26, the thrust washers 14,16 preventing deformation of the member 12 by said clips. The bearing member 12 provides inner and outer surfaces of substantial axial extent for bearing engagement with the male and female connecting pieces 4,10 respectively on swivelling movement therebetween such that the joint can withstand substantial non-axial forces applied thereto without distortion of the components thereof.

Conveniently, an annular dust seal 28 completes the assembly and seals the free end of the female connecting piece, said seal 28 being mounted on the male connecting piece 4 prior to the bearing member 12 and washers 14,16.

It will thus be appreciated that such a joint is of relatively simple construction, the components thereof being relatively inexpensive to manufacture, while assembly is readily and easily effected.

## Claims

1. A swivel joint between two lengths of pipe, the joint comprising a male connecting piece (4) on the end of one length of pipe (2), and a corresponding female connecting piece (10) on the end of the other length of pipe (8), and characterised by a cylindrical bearing member (12) mounted on the male connecting piece (4), said bearing member (12) being retained on the male connecting piece (4) by first clip means (18) housed in a circumferential groove formed in the outer wall of the male connecting piece (4) adjacent the free end thereof, the internal wall of the female connecting piece (10) having a circumferential groove formed therein in such a manner that, on location of the male connecting piece (4) within the female connecting piece (10) and on location of second clip means (26) into said groove in the female connecting piece (10), the joint is effected with the first and second clip means (18,26) each reacting against the associated end of the bearing member (12) whereby the connecting pieces (4,10) can swivel relative to one another about the central longitudinal axis of the joint with the inner and outer faces of the bearing member (12) effecting bearing engagement with the male and female connecting pieces (4,10) respectively.

2. A swivel joint as claimed in claim 1 in which the first clip means comprises a resilient circlip (18).

3. A swivel joint as claimed in claim 1 or claim 2 in which the second clip means comprises a resilient circlip (26).

4. A swivel joint as claimed in any one of claims 1 to 3 and comprising a pair of thrust washers (14,16) one to each end of the cylindrical bearing member (12) and against which the first and second clip means (18,26) react.

5. A swivel joint as claimed in any one of claims 1 to 4 and comprising at least one substantially annular seal (20) reacting between opposed, radially spaced surfaces on the male and female connecting pieces (4,10), said seal being located axially inwardly of the first clip means (18) within the joint and effecting a radial seal between the two connecting pieces (4,10).

6. A swivel joint as claimed in any one of claims 1 to 5 and comprising an annular dust seal (28) located within the free end of the female connecting piece (10) axially outwardly of the second clip means (26) within the joint to react between opposed, radially spaced surfaces of the male and female connecting pieces (4,10).

0 266 092

| | **DOCUMENTS CONSIDERED TO BE RELEVANT** | | EP 87309073.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | DE - B2 - 1 965 246 (AEROQUIP AG) <br> * Totality * <br> -- | 1,3,4,6 | F 16 L 27/08 <br> F 16 L 27/00 |
| A | EP - A1 - 0 018 828 (KEYMAT POWER SAFETY HYDRAULICS LIMITED) <br> * Totality * <br> -- | 1,2,3 | |
| A | US - A - 4 366 973 (BREKKE) <br> * Totality * <br> -- | 1,2,3 | |
| D,A | EP - A1 - 0 214 777 (ANSON LIMITED) <br> * Totality * <br> -- | 1,5 | |
| A | DE - A - 1 961 870 (BÖLCKER) <br> * Totality * <br> ---- | 1,3 | TECHNICAL FIELDS SEARCHED (Int. Cl.4) <br><br> F 16 L 27/00 |

The present search report has been drawn up for all claims

| Place of search | Date of completion of the search | Examiner |
|---|---|---|
| VIENNA | 04-01-1988 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82